# EUROPÄISCHE PATENTANMELDUNG

(11) **EP 0 972 811 A1**
(43) Veröffentlichungstag der Anmeldung: **19.01.2000**
(21) Anmeldenummer: 99109378.2
(22) Anmeldetag: 02.06.1999
(51) Int. Cl.: C09D 183/06, C09D 183/14

(54) **Strahlungshärtende, Copolymere enthaltende Zusammensetzungen**

(30) Priorität: 16.07.1998 DE 19832026
(71) Anmelder: Wacker-Chemie GmbH, 81737 München (DE)
(72) Erfinder: Dauth, Jochen, Dr., 84489 Burghausen (DE); Weidner, Richard, Dr., 84489 Burghausen (DE); Preiner, Gerhard, Dr., 84489 Burghausen (DE)
(74) Vertreter: Budczinski, Angelika

(57) **Zusammenfassung**

Beschrieben werden neue strahlungshärtende Zusammensetzungen enthaltend
(A) (Meth)acryloxygruppen aufweisende lineare Organopolysiloxane der allgemeinen Formel

   R¹ₓR₃₋ₓSiO(R₂SiO)ₘ(SiRR¹O)ₙSiR₃₋ₓR¹ₓ (I)

   und/oder

   R¹ₐR₃₋ₐSiO(R₂SiO)_{c}[R₂Si-Y-SiR₂O(R₂SiO)_{c}]_{d}SiR_{3-b}R¹_{b} (II)

   wobei R einen einwertigen, gegebenfalls substituierten Kohlenwasserstoffrest mit 1 bis 18 Kohlenstoffatomen je Rest bedeutet, R¹ ein Rest der Formel 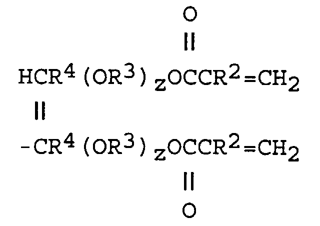 ist, wobei R², R³, R⁴, Y, c, d, m, n und z die im Anspruch 1 dafür angegebene Bedeutung haben,
   x 0 oder 1 ist, mit der Maßgabe, daß in Formel (I)
   mindestens ein Rest R¹ je Molekül enthalten ist,
   a 0 oder 1 ist, b 0 oder 1 ist,
   mit der Maßgabe, daß in Formel (II) die Summe a + b je Molekül 1 oder 2, durchschnittlich 1,3 bis 1,9 ist,
(B) (Meth)acryloxygruppen aufweisende Copolymere, welche in der Komponente (A) löslich sind und ausgewählt aus einer Gruppe bestehend aus
(B1) einem MQ-Copolymer, (B2) einem MT-Copolymer,
(B3) einem MTQ-Copolymer und (B4) einem MDQ-Copolymer gemäß Anspruch 1,
(C) Photoinitiatoren und gegebenenfalls
(D) organische Mono-, Di- oder Oligo(meth)acrylate oder deren Gemische.

## Beschreibung

Die Erfindung betrifft strahlungshärtende Zusammensetzungen, daraus hergestellte Formkörper sowie ein Verfahren zur Herstellung von Beschichtungen.

In EP-A 617 094 (Goldschmidt AG, offengelegt am 28.09.93) bzw. der korrespondierenden US-A 5,494,979 sind abhäsive Beschichtungsmassen auf der Basis eines strahlungshärtenden (Meth)acrylsäureestergruppen aufweisenden Organopolysiloxans, welches ein den Grad der Abhäsivität beeinflussendes Zusatzmittel enthält, wobei das Zusatzmittel durch Umsetzung eines MQ-Harzes mit einem (Meth)acrylsäureestergruppen enthaltenden Polysiloxan erhältlich ist, beschrieben. Die Darstellung des Zusatzmittels erfolgt durch eine Equilibrierung von nicht funktionellen MQ-Harzen mit linearen acrylfunktionellen Polysiloxanen unter Zusatz eines sauren Katalysators. Die Produktqualität hängt stark von der Equilibriergüte ab. Die eingebrachten linearen Siliconanteile haben den Nachteil, daß sie die Trennkrafterhöhung schwächen.

In der DE-C 43 00 267 (Goldschmidt AG, veröffentlicht am 21.04.94) werden mit Estern olefinisch ungesättigter Säuren, sowie quartären Ammoniumgruppen modifizierte Organopolysiloxane zur Trennkraftregulierung eingesetzt. Die Mischbarkeit der Zusatzmittel mit salzartigem Charakter und acrylatfunktionellen Polysiloxanen ist stark eingeschränkt. Die trennkraftregulierenden Zusatzmittel mit quartären Ammoniumgruppen weisen keine stabilen Trennkraftwerte auf.

Ein ähnlicher Weg wird in DE-C 38 10 140 (Goldschmidt AG, veröffentlicht am 5.10.89) bzw. der korrespondierenden US-A 4,963,438 beschritten. Die Trennkraftregulierung erfolgt über polare Wechselwirkung von protisch polaren Resten am Polysiloxan mit den Klebern. Die abhäsiven Eigenschaften lassen sich dem chemischen Charakter des Klebstoffes anpassen, so daß der gewünschte Grad der Abhäsivität eingestellt werden kann. Dies hat den Nachteil, daß eine Vielzahl von Zusatzmitteln dargestellt werden muß, um spezifisch für unterschiedliche Kleber, den ganzen Trennkraftbereich abdecken zu können. Außerdem sind die Trennkraftwerte, die über polare Wechselwirkungen ohne Harzzusatz herbeigeführt werden, nicht über längere Zeiträume stabil.

In EP-A 336 633 (Loctite Corporation, offengelegt am 04.12.89) werden MTQ-Polysiloxanharze mit (Meth)acrylatgruppen, Verfahren zur Herstellung und Beschichtungs- oder Einbettungszusammensetzungen beschrieben. Die MTQ-Silicon-Hybrid-Harze werden durch basische Equilibrierung von MTQ-Harzen mit (Meth)acryloxypropylgruppen und Siliconölen mit (Meth)acrylatendgruppen hergestellt, wobei pro Si-Atom maximal eine Acrylatgruppe eingeführt werden kann.

Aus EP-A 656 386 (Dow Corning Toray Silicone Company, offengelegt am 07.06.95) sind Phenyl- und Acrylatgruppen enthaltende Siliconharze für Beschichtungszwecke bekannt. Die Harze eignen sich nicht für die Trennkraftregulierung von abhäsiven Beschichtungsmassen.

Trennkraft regulierende Additive für strahlenhärtende Siliconsysteme mit Epoxygruppen sind in EP-A 473 995 (General Electric, offengelegt am 11.03.92) und in EP-A 464 706 (Toshiba Silicone Co., offengelegt am 08.01.92) beschrieben.

Strahlungshärtende Zusammensetzungen auf der Grundlage von (Meth)acryloxygruppen aufweisenden Organosiliciumverbindungen sind in US-A 5,593,787 (Wacker-Chemie GmbH, ausgegeben am 14.1.1997) beschrieben.

Es bestand die Aufgabe, neue Zusammensetzungen auf Grundlage von (Meth)acryloxygruppen aufweisenden Organopolysiloxanen bereitzustellen, die durch Bestrahlung, vorzugsweise mit Licht, radikalisch vernetzen. Ferner bestand die Aufgabe, Zusammensetzungen für die Herstellung von klebrige Stoffe abweisenden Überzügen bereitzustellen. Des weiteren bestand die Aufgabe, abhäsive Beschichtungszusammensetzungen bereitzustellen, die abriebfeste Überzüge ergeben, d. h. auf dem Untergrund haften, so daß sie durch mechanische Einflüsse, wie z. B. durch Reiben, nicht vom Untergrund getrennt werden können, damit sie beim Abziehen darauf befindlicher, mit Klebstoffen versehener Träger, wie z. B. Etiketten, nicht teilweise abgelöst werden und so die Klebkraft der Etiketten vermindern. Weiterhin bestand die Aufgabe, lösungsmittelfreie, niederviskose, abhäsive Beschichtungszusammensetzungen bereitzustellen, die einen guten Verlauf auf Substraten, wie Papier und Folie zeigen, sowie klebfreie, gut ausgehärtete Überzüge ergeben. Ferner bestand die Aufgabe, abhäsive Beschichtungszusammensetzungen bereitzustellen, die es erlauben, den gewünschten Grad der Abhäsivität einzustellen, wobei speziell bei hohen Trennkraftwerten keine oszillierenden Trennwertschwankungen auftreten sollen. Die Aufgabe wird durch die Erfindung gelöst.

Gegenstand der Erfindung sind strahlungshärtende Zusammensetzungen enthaltend
(A) (Meth)acryloxygruppen aufweisende lineare Organopolysiloxane der allgemeinen Formel

   R¹ₓR₃₋ₓSiO(R₂SiO)ₘ(SiRR¹O)ₙSiR₃₋ₓR¹ₓ (I)

   und/oder

   R¹ₐR₃₋ₐSiO(R₂SiO)_{c}[R₂Si-Y-SiR₂O(R₂SiO)_{c}]_{d}SiR_{3-b}R¹_{b} (II)

   wobei R gleich oder verschieden sein kann, einen einwertigen, gegebenfalls substituierten Kohlenwasserstoffrest mit 1 bis 18 Kohlenstoffatomen je Rest, der frei von endständigen aliphatischen Kohlenstoff-Kohlenstoff-Mehrfachbindungen ist, bedeutet
   und Reste der Formel -O-R*'* bedeutet, wobei R*'* einen einwertigen Kohlenwasserstoffrest mit 1 bis 12 Kohlenstoffatomen je Rest oder ein Wasserstoffatom bedeutet.
   R¹ ein Rest der Formel 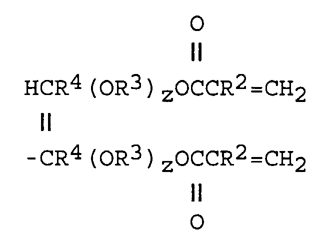 ist, wobei z eine ganze Zahl im Wert von 1 bis 10,
   R² ein Wasserstoffatom oder einen Methylrest,
   R³ einen linearen oder verzweigten Alkylenrest mit 1 bis 6 Kohlenstoffatom(en) je Rest und
   R⁴ einen linearen oder verzweigten Alkylenrest mit 1 bis 6 Kohlenstoffatom(en) je Rest bedeutet,
   m 0 oder eine ganze Zahl im Wert von 1 bis 200 ist,
   n 0 oder eine ganze Zahl im Wert von 1 bis 200 ist,
   x 0 oder 1 ist,
   mit der Maßgabe, daß in Formel (I) mindestens ein Rest R¹ je Molekül enthalten ist,
   Y einen zweiwertigen, organischen Rest, der frei von endständigen aliphatischen Kohlenstoff-Kohlenstoff-Mehrfachbindungen ist, bedeutet,
   a 0 oder 1 ist,
   b 0 oder 1 ist,
   mit der Maßgabe, daß in Formel (II) die Summe a + b je Molekül 1 oder 2, durchschnittlich 1,3 bis 1,9 ist,
   c eine ganze Zahl im Wert von 1 bis 1 000 ist und
   d 0 oder eine ganze Zahl im Wert von 1 bis 10 ist,
(B) (Meth)acryloxygruppen aufweisende Copolymere ausgewählt aus einer Gruppe bestehend aus
(B1) einem MQ-Copolymer enthaltend Struktureinheiten M^{o}Q und/oder M¹Q,
(B2) einem MT-Copolymer enthaltend Struktureinheiten M¹T^{o} und/oder M^{o}T¹ und/oder M¹T¹ und/oder M^{o}T^{o},
(B3) einem MTQ-Copolymer enthaltend Struktureinheiten M¹T^{o}Q und/oder M^{o}T¹Q und/oder M¹T¹Q und/oder M^{o}T^{o}Q und
(B4) einem MDQ-Copolymer enthaltend Struktureinheiten M¹D^{o}Q und/oder M^{o}D¹Q und/oder M¹D¹Q und/oder M^{o}D^{o}Q wobei
   - M^{o}: eine R₃SiO_{1/2} - Einheit,
   - M¹: eine R¹R₂SiO_{1/2} - Einheit,
   - D^{o}: eine R₂SiO - Einheit,
   - D¹: eine R¹RSiO - Einheit,
   - T^{o}: eine RSiO_{3/2} - Einheit,
   - T¹: eine R¹SiO_{3/2} - Einheit und
   - Q: eine SiO₂ - Einheit ist,
   wobei R und R¹ die oben dafür angegebene Bedeutung haben, und
(C) Photoinitatoren
   und gegebenenfalls
(D) organische Mono-, Di- oder Oligo(meth)acrylate oder deren Gemische.

Gegenstand der Erfindung sind weiterhin Formkörper, hergestellt durch Vernetzung der erfindungsgemäßen strahlungshärtenden Zusammensetzungen.

Die erfindungsgemäßen strahlungshärtenden Zusammensetzungen werden vorzugsweise zur Herstellung von Beschichtungen, insbesondere zur Herstellung von klebrige Stoffe abweisenden Überzügen, verwendet.

Gegenstand der Erfindung ist weiterhin ein Verfahren zur Herstellung von Beschichtungen, vorzugsweise zur Herstellung von klebrige Stoffe abweisenden Überzügen, dadurch gekennzeichnet, daß die erfindungsgemäße strahlungshärtende Zusammensetzung auf das Substrat aufgetragen und durch Bestrahlung mit energiereicher Strahlung, vorzugsweise durch Bestrahlung mit Licht, vernetzen gelassen wird.

Die (Meth)acryloxygruppen aufweisenden linearen Organopolysiloxane (A) besitzen vorzugsweise eine Viskosität von 20 bis 20 000 mm²/s bei 25°C, bevorzugt 20 bis 1.000 mm²/s bei 25°C, besonders bevorzugt 20 bis 500 mm²/s bei 25°C.

Die Organopolysiloxane (A) weisen vorzugsweise Jodzahlen zwischen 1 und 60, bevorzugt 4 und 40, auf, wobei die Jodzahl die bei der Addition an die Doppelbindung verbrauchte Jodmenge in Gramm pro 100 Gramm eingesetztes, erfindungsgemäßes Organopolysiloxan angibt.

Beispiele für den Rest R sind jeweils Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl- und der tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentyl- und der 2-Ethylhexylrest, Nonylreste, wie der n-Nonylrest, Decylreste, wie der n-Decylrest, Dodecylreste, wie der n-Dodecylrest, Tetradecylreste wie der n-Tetradecylrest, Hexadecylreste, wie der n-Hexadecylrest und Octadecylreste, wie der n-Octadecyl-rest; Cycloalkylreste, wie Cyclopentyl-, Cyclohexyl- und 4-Ethylcyclohexylrest, Cycloheptylreste, Norbornylreste und Methylcyclohexylreste; Arylreste, wie der Phenyl-, Biphenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, sowie der α- und der β-Phenylethylrest. Bei dem Rest R handelt es sich bevorzugt um den Methylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest; Halogenarylreste, wie der o-, m-, und p-Chlorphenylrest, und Alkylreste, die durch ein Ethersauerstoffatom substituiert sind, wie der 2-Methoxyethyl- und der 2-Ethoxyethylrest.

Bevorzugt ist der Rest R² ein Wasserstoffatom.

Beispiele für Rest R³ sind Alkylenreste der Formel -CH₂-CH₂-, -CH₂-CH₂-CH₂-, -C(CH₃)HCH₂- und -(CH₂)₄-. Bevorzugt ist R³ ein Rest der Formel -CH₂-CH₂-.

Beispiele für Alkylenreste R⁴ sind solche der Formel -CH₂-, -CH(CH₃)-, -C(CH₃)₂-, -C(CH₃)(C₂H₅)-, -(CH₂)₂- und -(CH₂)₄-, wobei der Rest der Formel -CH₂- bevorzugt ist.

Beispiele für Reste R*'* sind Alkylreste der Formel -CH₃, -CH₂-CH₃ und -(CH₂)₂-CH₃.

Beispiele für Reste R¹ sind solche der Formel 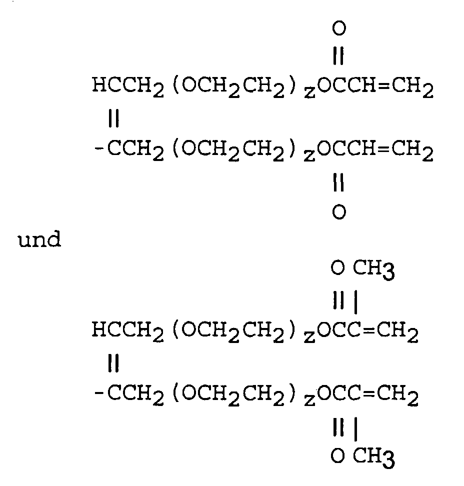 wobei z die oben dafür angegebene Bedeutung hat, bevorzugt eine ganze Zahl im Wert von 2 bis 8 ist.

Vorzugsweise ist Y ein zweiwertiger Kohlenwasserstoffrest, der durch ein oder mehrere Sauerstoffatome unterbrochen sein kann. Beispiele für Reste Y sind solche Formeln -CH₂CH₂-, -CH(CH₃)-, -(CH₂)₄-, -(CH₂)₅-, -(CH₂)₆-, -(CH₂)₈-, -(CH₂)₁₀-, -(CH₂)₁₂-, -(CH₂)₃O(CH₂)₃-, 1,3-(CH₂CH₂)₂(C₆H₄), 1,4-(CH₂CH₂)₂(C₆H₄), 1,3-(CH₂CHCH₃)₂(C₆H₄) und 1,4-(CH₂CHCH₃)₂(C₆H₄),
wobei die Reste der Formeln -CH₂CH₂-, -CH(CH₃)-, -(CH₂)₆-, -(CH₂)₈-, 1,3-(CH₂CH₂)₂(C₆H₄), 1,4-(CH₂CH₂)₂(C₆H₄), 1,3-(CH₂CHCH₃)₂(C₆H₄) und 1,4-(CH₂CHCH₃)₂(C₆H₄) bevorzugt sind und der Rest der Formel -CH₂CH₂- besonders bevorzugt ist.

Die Organopolysiloxane (A) der Formel (II) weisen als Endgruppen durchschnittlich 65 bis 95 Mol-% Reste R¹ (bzw. 35 bis 5 Mol-% Reste R, bevorzugt Methylendgruppen) auf, was einer durchschnittlichen Summe a + b von 1,3 bis 1,9 entspricht. Bei den erfindungsgemäßen Zusammensetzungen wird vorzugsweise ein Gemisch von verschiedenen Organopolysiloxanen (A) eingesetzt.

Bevorzugt ist die Summe a + b durchschnittlich 1,4 bis 1,9.

Vorzugsweise ist c eine ganze Zahl im Wert von 10 bis 300, bevorzugt 15 bis 150.

Vorzugsweise ist d 0 oder eine ganze Zahl im Wert von 1 bis 3, bevorzugt ist d 0.

Vorzugsweise ist m eine ganze Zahl im Wert von 5 bis 100, bevorzugt 10 bis 70.

Vorzugsweise ist n 0 oder eine ganze Zahl im Wert von 1 bis 20, bevorzugt 4 bis 8.

Die (Meth)acryloxygruppen aufweisenden Copolymere (B), die in den erfindungsgemäßen Zusammensetzungen vorzugsweise die Trennkraft regulieren, stellen, abhängig vom Molekulargewicht und dem eingestellten M/D/T/Q-Verhältnis, eine hochviskose bis feste Substanz dar. Sie sind in der Komponente (A) vorzugsweise löslich und das mittlere Molekulargewicht der Komponente (B) beträgt vorzugsweise 500 bis 200 000.

In den MQ-Harzen beträgt das Verhältnis der M°- bzw. M¹-Einheiten zu den Q-Einheiten vorzugsweise 0,5 bis 1,5 (M:Q = 0,5:1,0 bis 1,5:1,0).

In den MT-Harzen beträgt das Verhältnis der M^{o}- bzw. M¹-Einheiten zu den T^{o}- bzw. T¹-Einheiten vorzugsweise 0,2 bis 1,1 (M:T = 0,2:1,0 bis 1,1:1,0).

In den MTQ-Harzen beträgt das Verhältnis der M^{o}- bzw. M¹-Einheiten zu der Summe der T^{o}- bzw. T¹- und Q-Einheiten vorzugsweise 0,5 bis 1,5 (M:(T+Q) = 0,5:1,0 bis 1,5:1,0) und das Verhältnis der T°- bzw. T¹-Einheiten zu den M^{o}- bzw. M¹-Einheiten vorzugsweise 0,05 bis 0,6 (T:M = 0,05:1,0 bis 0,6:1,0).

In den MDQ-Harzen beträgt das Verhältnis der M^{o}- bzw. M¹-Einheiten zu der Summe der D^{o}- bzw. D¹- und Q-Einheiten vorzugsweise 0,2 bis 1,2 (M:(D+Q) = 0,2:1,0 bis 1,2:1,0) und das Verhältnis der D^{o}- bzw. D¹-Einheiten zu den M^{o}- bzw. M¹-Einheiten vorzugsweise 0,1 bis 20,0 (D:M = 0,1:1,0 bis 20,0:1,0).

Bevorzugt werden M^{o}T¹Q-Harze bei den erfindungsgemäßen Zusammensetzungen eingesetzt.

Bei den erfindungsgemäßen Zusammensetzungen wird die Komponente (B) in solchen Mengen eingesetzt, daß das Verhältnis der Komponente (B) zur Komponente (A) vorzugsweise 0,05 bis 0,9 beträgt (B:A = 0,05:1,0 bis 0,9:1,0).

Bevorzugt werden die Copolymere (B) nach dem in der DE-A 42 16 139 (Wacker-Chemie GmbH, offengelegt am 18.11.93) bzw. der korrespondierenden US-A 5,548,053 beschriebenen Verfahren hergestellt.
Dabei wird in einer 1. Stufe
mindestens ein Silan der Formel

   R⁵R⁶₂SiOR⁷ (III)
und/oder dessen Hydrolysat R⁵R⁶₂SiOR⁶₂R⁵, wobei
R⁵ gleich oder verschieden sein kann und die Bedeutung von R oder R¹ hat,
R⁶ gleich oder verschieden sein kann und einen einwertigen organischen Rest bedeutet,
R⁷ einen Alkylrest bedeutet,
und mindestens ein Silan der Formel

   Si(OR⁷)₄ (IV)
und/oder deren Teilhydrolysate, wobei R⁷ die oben dafür angegebene Bedeutung hat,
sowie gegebenenfalls Organosiliciumverbindung, ausgewählt aus der Gruppe bestehend aus Silanen der Formel

   R⁵R⁶Si(OR⁷)₂ (V)
und/oder deren Teilhydrolysate, wobei
R⁵, R⁶ und R⁷ die oben dafür angegebene Bedeutung haben, und Organo(poly)siloxane der Formel

   (R⁵R⁶SiO)_{b} (VI)
wobei b eine ganze Zahl im Wert von 3 bis 8 ist und
R⁵ und R⁶ die oben dafür angegebene Bedeutung haben,
sowie deren Gemische,
mit Wasser in Gegenwart von Säure umgesetzt, wobei der entstandene Alkohol zumindest zum Teil abdestilliert wird,
in einer 2. Stufe
   wird die in der 1. Stufe erhaltene homogene Reaktionsmasse in Anwesenheit von Base sowie mindestens einer solchen Menge an wasserunlöslichem organischen Lösungsmittel, die zur Erhaltung einer homogenen Reaktionsmasse ausreicht, umgesetzt und Wasser sowie Alkohol werden destillativ entfernt,
in einer 3. Stufe
   wird die in der 2. Stufe erhaltene homogene Reaktionsmasse mit Säure neutralisiert, gegebenenfalls noch vorhandenes Wasser und Alkohol wird abdestilliert und das aus der Neutralisation entstandene, ausgefallene Salz wird entfernt sowie
gegebenenfalls in einer 4. Stufe
   wird die in der 3.Stufe erhaltene homogene Reaktionsmasse von wasserunlöslichem organischen Lösungsmittel befreit.

Bespiele für Silane der Formel (V) sind Additionsprodukte von Triethoxysilan und Alk-2-in-di(meth)acrylaten (siehe Beispielteil: Herstellung der Vorstufe für die (Meth)acrylatgruppen aufweisenden Copolymere (B)).

MQ-Harze mit Si-gebundenem Wasserstoff können beispielsweise nach der in DE-A 195 45 363 (Wacker-Chemie GmbH, offengelegt am 12.06.97) beschriebenen Vorgehensweise erhalten werden.

Dabei werden MQ-Harze, bevorzugt hergestellt nach dem in der oben genannten DE-A 42 16 139 beschriebenen Verfahren (siehe Beispielteil), mit Disiloxanen der Formel

HR⁶₂SiOR⁶₂H

in Mengen von vorzugsweise 1 bis 50 Gew.-%, bevorzugt 1 bis 25 Gew.-%, jeweils bezogen auf das verwendete MQ-Harz, in Gegenwart eines sauren Katalysators bei einer Temperatur von bevorzugt 20 bis 150°C, besonders bevorzugt 30 bis 90°C, und dem Druck der umgebenden Atmosphäre umgesetzt, wobei nach Beendigung der Reaktion der saure Katalysator entfernt wird.

Beispiele für die eingesetzten sauren Katalysatoren sind Lewis-Säuren, wie BF₃, AlCl₃, FeCl₃ und Phosphornitrilchlorid, sowie Brönstedt-Säuren, wie Salzsäure, Schwefelsäure, Phosphorsäure, Essigsäure und p-Toluolsulfonsäure, sowie saure Ionenaustauscher, wie Zeolithe und säureaktivierte Bleicherde, wobei säureaktivierte Bleicherde bevorzugt ist.

Der saure Katalysator wird in Mengen von vorzugsweise 0,5 bis 20 Gew.-%, bevorzugt 1 bis 15 Gew.-%, jeweils bezogen auf das Gesamtgewicht der eingesetzten Organosiliciumverbindungen, angewendet.

Nach Beendigung der Reaktion wird der Katalysator durch Filtration von der Reaktionsmasse abgetrennt, sofern es sich um einen in der Reaktionsmasse unlöslichen Katalysator, wie beispielsweise die säureaktivierte Bleicherde, handelt. Andernfalls erfolgt die Entfernung des Katalysators von der Reaktionsmasse durch Neutralisation und anschließender Filtration des entstandenen Salzes. In jedem Fall wird das Filtrat dann von niedrigflüchtigen Bestandteilen vorzugsweise bei einer Temperatur von 50 bis 160°C und einem Druck von 30 bis 60 hPa, bevorzugt 100 bis 150°C und 50 bis 500 hPa, befreit.

Die (Meth)acryloxygruppen aufweisenden Organosiliciumverbindungen (A) und (B) werden bevorzugt nach dem in der DE-A 196 41 067(Wacker-Chemie GmbH, offengelegt am 09.04.98) beschriebenen Verfahren hergestellt, indem alkoxylierte Alk-2-in-di(meth)acrylate-1,4 der allgemeinen Formel 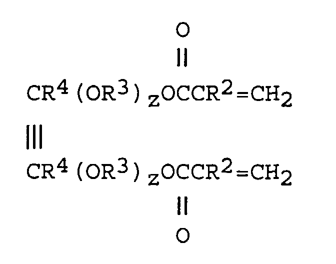 wobei R², R³, R⁴ und z die oben dafür angegebene Bedeutung haben, mit
Si-gebundene Wasserstoffatome aufweisenden Organosiliciumverbindungen
in Gegenwart von die Anlagerung von Si-gebundenen Wasserstoff an aliphatische Mehrfachbindung fördernde Katalysatoren sowie in Gegenwart von Polymerisationsinhibitoren umgesetzt werden, mit der Maßgabe, daß alkoxylierte Alk-2-in-di(meth)acrylate-1,4 in Mengen von 1,01 bis 1,5 Mol, bevorzugt 1,01 bis 1,2 Mol, je Grammatom Si-gebundenem Wasserstoff in den Si-gebundenen Wasserstoffatomen aufweisenden Organosiliciumverbindungen eingesetzt werden.

Alkoxylierte Alk-2-in-di(meth)acrylate-1,4 sind nach allgemeinen Verfahren aus dem Stand der Technik herstellbar: Dabei wird das alkoxylierte Alkindiol, z. B. das ethoxylierte But-2-in-diol-1,4, mit Acrylsäure unter saurer Katalyse verestert. Das Reaktionswasser wird azeotrop entfernt.

Die Anlagerung von Si-gebundenem Wasserstoff an aliphatische Mehrfachbindungen fördernde Katalysatoren, sogenannte Hydrosilylierungskatalysatoren, sind dem Fachmann bekannt und Beispiele hierfür sowie die eingesetzten Mengen an Katalysatoren sind in der eingangs erwähnten US-A 5,593,787 beschrieben.

Als Polymerisationsinhibitor werden vorzugsweise phenolische Stabilisatoren wie Kresol- bzw. Hydrochinonderivate, z. B. Bis(tert. butyl)-kresol, 2,5-Di-tert. butyl-hydrochinon oder der Monomethylether des Hydrochinons oder Phenothiazin in einer Konzentration von vorzugsweise 0,001 bis 1 Gew.-%, bevorzugt von 0,002 bis 0,5 Gew.-%, bezogen auf das Gesamtgewicht von alkoxyliertem Alkindiacrylat und Organosiliciumverbindung eingesetzt.

Geeignete Photoinitiatoren (C) zur Verwendung in den erfindungsgemäßen strahlungshärtenden Zusammensetzungen sind gegebenenfalls substituierte Acetophenone, Propiophenone, Benzophenone, Anthrachinone, Benzile, Carbazole, Xanthone, Thioxanthone, Fluorene, Fluorenone, Benzoine, Naphtalinsulfonsäuren, Benzaldehyde und Zimtsäuren.

Beispiele hierfür sind Fluorenon, Fluoren, Carbazol; Acetophenon; substituierte Acetophenone, wie 3-Methylaceto-phenon, 2,2-Dimethoxy-2-phenylacetophenon, 4-Methylacetophenon, 3-Bromacetophenon, 4-Allylacetophenon, p-Diacetylbenzol, p-tert.-Butyltrichloracetophenon; Propiophenon; substituierte Propiophenone, wie 1-[4-(Methylthio)phenyl]-2-morpholinpropanon-1; Benzophenon; substituierte Benzophenone, wie Michlers Keton, 3-Methoxybenzophenon, 4,4-Dimethylaminobenzophenon, 4-Methylbenzophenon, 4-Chlorbenzophenon, 4,4-Dimethoxybenzophenon, 4-Chlor-4-benzylbenzophenon; Xanthon; substituierte Xanthone, wie 3-Chlorxanthon, 3,9-Dichlorxanthon, 3-Chlor-8-nonylxanthon; substituierte Xanthone, wie 3-Chlorxanthon, 3,9-Dichlorxanthon, 3-Chlor-8-nonylxanthon; Thioxanthon; substituierte Thioxanthone, wie Isopropylthioxanthon; Anthrachinon; substituierte Anthrachinone, wie Chloranthrachinon und Anthrachinon-1,5-disulfonsäuredinatriumsalz; Benzoin; substituierte Benzoine, wie Benzoinmethylether; Benzil; 2-Naphtalinsulfonylchlorid; Benzaldehyd; Zimtsäure. Besonders bevorzugt ist Oligo (2-hydroxy-2-methyl-1-(4-(1-methylvinyl) phenyl) propanon).

Photoinitiatoren (C) werden in den erfindungsgemäßen Zusammensetzungen in Mengen von vorzugsweise 0,01 bis 10 Gew.-%, bevorzugt 0,5 bis 5 Gew-%, jeweils bezogen auf das Gesamtgewicht der zu vernetzenden Organosiliciumverbindungen (A) und (B) eingesetzt.

Die erfindungsgemäßen Zusammensetzungen können Polymerisationsinhibitoren enthalten. Aus Gründen der besseren Handhabung ist es bevorzugt, die erfindungsgemäßen Zusammensetzungen mit geringen Mengen Inhibitoren zu versetzen, um beispielsweise vorzeitige Vernetzungen einer verwendungsfähigen Formulierung während deren Lagerung zu verhindern. Beispiele für gegegebenenfalls eingesetzte Inhibitoren sind alle gebräuchlichen, auch bisher in radikalisch ablaufenden Prozessen eingesetzten Inhibitoren, wie Hydrochinon, 4-Methoxyphenol, 2,6-Ditert.butyl-4-methylphenol oder Phenothiazin. Vorzugsweise werden Inhibitoren in Mengen von 10 bis 10 000 ppm, besonders bevorzugt 50 bis 1 000 ppm, jeweils bezogen auf das Gesamtgewicht der zu vernetzenden Organopolysiloxane (A), eingesetzt.

Gegebenenfalls können zusätzlich organische Mono-, Di- und Oligo(meth)acrylate (D) oder deren Gemische in einer Menge von vorzugsweise 0,1 bis 30 Gewichtsprozent, bezogen auf das Gesamtgewicht der zu vernetzenden Organopolysiloxane (B), zugegeben werden, wobei dies nicht bevorzugt ist.

Bei dem gegebenenfalls eingesetzten Bestandteil (D) der erfindungsgemäßen Zusammensetzung handelt es sich um zumeist kommerziell erwerbbare funktionalisierte oder nicht funktionalisierte (Meth)acrylate, Di(meth)acrylate oder Oligo(meth)acrylate oder deren Gemische, die wasserlöslich oder wasserunlöslich sein können.

Beispiele für nicht funktionalisierte Mono(meth)acrylate sind Methylacrylat, Ethylacrylat, Butylacrylat, Methylmethacrylat, Cyclohexylacrylat, Isobornylacrylat, Laurylacrylat, Stearylacrylat, Ethylhexylacrylat, Tridecylacrylat, Isooctylacrylat.

Beispiele für funktionalisierte Mono(meth)acrylate sind:
- Perfluoralkylethylacrylat: (Fluowet AC 812, Hoechst AG)
- 2-Acrylamido-2-methyl-1-propan-sulfonsäure: (Lubrizol)
- 2-Acryloyloxyethylhydrogenphthalat: (Viscoat 2000, Siber-Hegner GmbH)
- beta-Acryloyoxyethylhydrogensuccinat: (ASA, Siber-Hegner GmbH)
- Acryloyloxyethylphosphorsäure: (Lightester PA, Toagosei)
- 2- Acryloyloxypropylhydrogenphthalat: (Viscoat 2100, Siber-Hegner GmbH)

Acrylsäure-(3-sulfopropyl)-esterkaliumsalz, Itaconsäure-bis-(3-sulfopropyl)-ester-dikaliumsalz, N,N-Dimethyl-N-methacryloxyethyl-N-(3-sulfopropyl)ammoniumbetain, 2-Carboxyethylacrylat, 2-Hydroxyethylacrylat, 2-Ethylthioethylmethacrylat, Acrylamid, 2-Acrylamido-2-methoxyessigsäuremethylester, Acrylnitril, (2-(Acryloxy)-ethyl)-(4-benzol-benzyl)-dimethyl-ammoniumbromid, Acrylsäure-(2-hydroxyethylester), Acryloxydimethylbutyrolacton, Acrylsäure, Methoxypolyethylenglykol-400-acrylat,, Nonylphenolethoxylatacrylat (N-117 E, Siber-Hegner), Nonylphenoldiethoxylatacrylat, Phenoxydiethylen-glykolacrylat, Phenoxyethylacrylat, Dimethylaminoethylacrylat, Dimethylaminoethylacrylatmethylchloridsalz, Glycidylacrylat, Phenoxypolyethylenglykolacrylat, 2,2,3,3-Tetrafluorpropylacrylat, Methaxypolyethylenglykol-1000-methacrylat, Tetrahydrofurfurylacrylat, Caprolactonacrylat, 2(2-Ethoxyethoxy)ethylacrylat, 2-Acrylamidoglykalsäure.

Beispiele für nicht funktionalisierte Di(meth)acrylate sind:

Hexandioldiacrylat, Butandioldiacrylat, GX-8370 (Fa. Siber-Hegner),
1,3-Butandioldimethacrylat, Neopentylglykoldiacrylat.

Beispiele für funktionalisierte Di(meth)acrylate sind:

2-Hydroxy-1-acryloxy-3-methacrylat, 2, 2-Dimethylpropionsäure-2,2-dimethylpropan-esterdiacrylat, Pentaaerythritoldiacrylatmonostearat, Polyethylenglykol-400-diacrylat, Polyethylenglykol-300-diacrylat, Polypropylenglykol-400-diacrylat, Tetraethylenglykoldiacrylat, Polypropylenglykol-700-diacrylat, 2,2-bis-[4-Acryloxydiethoxy)]-phenylpropan, Triethylenglykoldiacrylat, Tripropylenglykoldiacrylat, SR 349 (Fa. Sartomer), Polyethylenglykol-600-diacrylat, propoxyliertes Neopentylglykoldiacrylat.

Beispiele für ein nicht funktionalisiertes Oligo(meth)acrylat ist Trimethylolpropantriacrylat.

Beispiele für funktionalisierte Oligo(meth)acrylate sind:

M-325 (Fa. Siber-Hegner), Pentaerythritolpenta- und hexaacrylat, A-TMMT (Fa. Siber-Hegner), Tetramethylolmethantriacrylate, Trimethylolmethanoltriacrylat, Trimethylolpropanethoxylattriacrylat, Tris(acryloyloxyethyl)phosphat, Tris(2-Hydro-xyethyl)-isocyanurat-triacrylat, ethoxyliertes Trimethylolpropantriacrylat, propoxyliertes Trimethylolpropantriacrylat, propoxyliertes Glyceryltriacrylat, Di-Trimethylolpropantetraacrylat, Dipentaaerythritolpentaacrylat, ethoxyliertes Pentaaerythritoltetraacrylat.

Der Bestandteil (D) kann aus einer Art von Acrylatverbindung oder aus einem Gemisch zweier oder mehrerer Acrylatverbindungen bestehen.

Vorzugsweise werden die erfindungsgemäßen strahlungshärtenden Zusammensetzungen durch Licht, bevorzugt durch Ultraviolettlicht, vernetzt, wobei solches mit Wellenlängen im Bereich von 200 bis 400 nm bevorzugt ist. Das Ultraviolettlicht kann, z. B. in Xenon-, Quecksilbernieder-, Quecksilbermittel-, Quecksilberhochdrucklampen oder Excimerlampen, erzeugt werden. Zur Vernetzung durch Licht ist auch solches mit einer Wellenlänge von 400 bis 600 nm, also sogenanntes "Halogenlicht", geeignet.

Bei den zur Vernetzung der erfindungsgemäßen Zusammensetzungen geeigneten Energiequellen kann es sich aber auch um Röntgen-, Gamma- oder Elektronenstrahlen oder um gleichzeitige Anwendung von mindestens zwei verschiedenen Arten solcher Strahlen handeln. Zusätzlich zu der energiereichen Strahlung kann Wärmezufuhr, einschließlich Wärmezufuhr mittels Infrarotlicht, angewendet werden. Eine solche Wärmezufuhr ist jedoch keineswegs erforderlich und vorzugsweise unterbleibt sie, um den Aufwand für Energie zu verringern.

Beispiele für Substrate, auf welche die erfindungsgemäßen Beschichtungen, bevorzugt klebrige Stoffe abweisende Überzüge aufgebracht werden können, sind diejenigen von Papier, Holz, Kork, Kunststofffolien, z.B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m², ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunstoff, Holz oder Eisen, das für Lagerung und/oder Transport von klebrigen Gütern, wie Klebstoffen, klebrigen Lebensmitteln, z. B. Kuchen, Honig, Bonbons und Fleisch; Bitumen, Asphalt, gefetteten Materialien und Rohgummi, bestimmt ist. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem oft-line Verfahren als auch nach dem in-line Verfahren.

Das Auftragen der erfindungsgemäßen durch Bestrahlung mit Licht vernetzbaren Zusammensetzungen auf die zu überziehenden Substrate kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravurüberzugsvorrichtung, Messer- oder Rakelbeschichtung. Bevorzugt sind Mehrwalzenauftragssysteme.

Die erfindungsgemäßen strählungshärtenden Beschichtungen haben den Vorteil, daß gegenüber vielen klebrigen Stoffen kein Zippy-Release auftritt. Desweiteren besteht der Vorteil, daß die erfindungsgemäßen Zusammensetzungen niedrige Viskositäten besitzen und auch unter hoher Friktion keine misting-Probleme verursachen. Die erfindungsgemäßen Zusammensetzungen zeigen auf vielen Substraten einen guten Verlauf. Weiterhin besteht der Vorteil, daß durch die gezielt einstellbaren Funktionsdichten und M-, D-, T-, Q- Gehalte verschiedene Trennkraftabstufungen einstellbar sind und die Zusammensetzungen gut miteinander abmischbar sind.

Die erfindungsgemäßen Zusammensetzungen weisen eine hohe Aushärtungsgeschwindigkeit auf und haben den Vorteil, daß die meisten erwerbbaren Photoinitiatoren eine gute Löslichkeit darin aufweisen und daß die erfindungsgemäßen Zusammensetzungen eine gute Substrathaftung besitzen.

Die erfindungsgemäßen (Meth)acryloxygruppen aufweisenden Copolymere können weiterhin als Zusatz in Lacken Anwendung finden.

### Herstellung der Vorstufe für die (Meth)acrylatgruppen aufweisenden Copolymere (B):

765,5 g (1,7 mol) eines ethoxylierten Butindioldiacrylates mit im Durchschnitt drei Ethylenoxidwiederholungseinheiten pro Acrylatgruppe werden unter Rühren und Stickstoffüberlagerung mit 40 ppm, bezogen auf ethoxyliertes Butindioldiacrylat, Phenothiazin auf 90°C temperiert.
Anschließend werden 3,78 g einer Lösung eines Divinyltetramethyldisiloxanplatin (0) komplexes in Toluol mit einem Platingehalt, bezogen auf elementares Platin, von 2,76 Gew.-% zugegeben. Bezogen auf alle Edukte sind somit 100 ppm Platin enthalten.
Innerhalb von drei Stunden werden bei 90°C 279 g (1,7 mol) Hydrogentriethoxysilan zugetropft. Nach Zulaufende wird noch eine Stunde bei 90°C nachgerührt und dann im Hochvakuum bei 90°C 30 Minuten unter Rühren bis zur Gewichtskonstanz ausgeheizt.
Nach dem Abkühlen, wird das Produkt filtriert. Es werden 1034 g (99% d. Th.) eines braunen Öles der Viskosität von 65 mm²/s bei 25°C (VP 1) erhalten.

### Herstellung der (Meth)acrylatgruppen aufweisenden Copolymere (B):

### CRA 1:

22,0 kg (105,6 mol) Tetraethoxysilan, 10 kg (61,6 mol) Hexamethyldisiloxan und 4,4 kg (7,16 mol) der Vorstufe VP 1, dessen Herstellung oben beschrieben wurde, werden unter Rühren mit 5,1 kg destilliertem Wasser und 19,6 g einer 20%igen wäßrigen Salzsäure-Lösung versetzt. Danach wird auf 60°C temperiert und drei Stunden gerührt. Nach vollendeter Reaktionsdauer wird auf 100°C hochgeheizt und über drei Stunden 11,7 kg Destillat abgenommen.

Ist die Reaktionslösung auf 65°C abgekühlt, werden 13,7 kg (148,9 mol) Toluol und portionsweise 73,2 g einer 25%igen wäßrigen Natriumhydroxid-Lösung zugegeben. Daraufhin wird die Reaktionslösung wieder auf 100°C temperiert und 10,8 kg Destillat über 2,5 Stunden abgenommen. Nach dem Anlegen eines Vakuums von 300 mbar werden über weitere 30 Minuten 3,8 kg Destillat abgenommen. Der Reaktionsansatz wird auf 50°C abgekühlt und mit 54 g einer 20%igen wäßrigen Salzsäure-Lösung versetzt. Danach erfolgt eine weitere Destillation von 1,9 kg bei 100^{°}C über eine Dauer von 40 Minuten bei einem Vakuum von 230 mbar. Ist die Reaktionslösung auf Raumtemperatur abgekühlt, werden weitere 18,2 kg (197,8 mol) Toluol zugegeben und der Ansatz filtriert. Es werden 43,6 kg einer braunen, klaren Lösung der Viskosität von 4,17 mm²/s bei 25°C erhalten. Diese wird mit 21,8 kg eines Polydimethylsiloxanes der allgemeinen Formel

G-SiMe₂O(SiMe₂O)₁₃SiMe₂-G (Me = Methylrest),

wobei G ein Rest der Formel 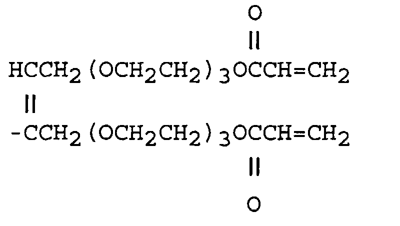 ist,
das eine durchschnittliche Kettenlänge von 15, endständige Diacrylatfunktionen und eine Viskosität von 110 mm²/s bei 25°C aufweist, versetzt. Danach wird die Lösung im Hochvakuum bei 110°C bis zur Gewichtskonstanz eingeengt und filtriert. Es werden 41,8 kg eines klaren, braunen Öles der Viskosität von 940 mm²/s bei 25°C (CRA 1) erhalten. Es handelt sich hierbei um ein M^{o}T¹Q-Harz.

### CRA 2:

800 g (3,84 mol) Tetraethoxysilan, 471 g (2,9 mol) Hexamethyldisiloxan und 160 g (0,26 mol) der Vorstufe VP 1, dessen Herstellung oben beschrieben wurde, werden unter Rühren mit 187 g destilliertem Wasser und 0,71 g einer 20%igen wäßrigen Salzsäure-Lösung versetzt. Danach wird auf 60°C temperiert und zwei Stunden gerührt. Nach vollendeter Reaktionsdauer wird auf 82°C hochgeheizt und über 1,5 Stunden 450 g Destillat abgenommen. Ist die Reaktionslösung auf 60°C abgekühlt, werden 498 g (5,41 mol) Toluol und 2,2 g einer 25%igen wäßrigen Natriumhydroxid-Lösung zugegeben. Daraufhin wird die Reaktionslösung auf 93°C temperiert und 425 g über 1,5 Stunden abgenommen. Nach dem Anlegen eines Vakuums von 600 mbar werden über weitere 30 Minuten 485 g Destillat abgenommen. Der Reaktionsansatz wird auf 55°C abgekühlt und mit 1,9 g einer 20%igen wäßrigen Salzsäure-Lösung versetzt. Danach erfolgt eine weitere Destillation von 21 g bei 69°C über 30 Minuten bei einem Vakuum von 600 mbar. Ist die Reaktionslösung auf Raumtemperatur abgekühlt, werden weitere 578 g (6,28 mol) Toluol zugegeben und der Ansatz filtriert. Es werden 1,67 kg einer braunen, klaren Lösung der Viskosität von 2,89 mm²/s bei 25°C erhalten.
Diese wird mit 0,56 kg eines oben bei der Herstellung des CRA 1 beschriebenen α,ω-diacrylierten Polydimethylsiloxanes der mittleren Kettenlänge 15 und einer Viskosität von 115 mm²/s bei 25°C, versetzt. Danach wird die Lösung im Hochvakuum bei 110°C bis zur Gewichtskonstanz eingeengt und filtriert. Es werden 1,33 kg eines klaren, braunen Öles der Viskosität von 1130 mm²/s bei 25°C (CRA 2) erhalten. Es handelt sich hierbei um ein M^{o}T¹Q-Harz.

### CRA 3

100,8 g eines Si-gebundene Wasserstoffatome aufweisenden MQ-Harzes mit einem Si-gebundenen Wasserstoffgehalt von 0,054 Gew.-% und einem M/Q-Verhältnis von 0,85/1 werden in 100 g (1,09 mol) Toluol gelöst und mit 24,7 g (54 mol) des ethoxylierten Butindioldiacrylates mit im Durchschnitt drei Ethylenoxidwiederholungseinheiten pro Acrylatgruppe versetzt. Die Reaktionsmischung wird unter Stickstoffatmosphäre auf 100°C temperiert und mit 1,5 g einer 1%igen (bezogen auf elementares Platin) Lösung eines Divinyltetramethyldisiloxanplatin (0) komplexes in Tolual versetzt. Anschließend wird zwei Stunden bei 100°C gerührt und filtriert.
Die Lösung wird mit 121 g eines oben bei der Herstellung des CRA 1 beschriebenen α,ω-diacrylierten Polydimethylsiloxanes der mittleren Kettenlänge 15 und einer Viskosität von 110 mm²/s bei 25°C versetzt. Danach wird die Lösung im Hochvakuum bei 100°C bis zur Gewichtskonstanz eingeengt und filtriert. Es werden 241 g eines klaren, braunen Öles der Viskosität von 6920 mm²/s bei 25°C (CRA 3) erhalten. Es handelt sich hierbei um ein M¹M^{o}Q-Harz.

### Beispiele 1 bis 4:

Die fertigen Formulierungen werden durch Mischen der oben beschriebenen CRA 1 - 3 mit einem α,ω-diacrylierten Polydimethylsiloxan der mittleren Kettenlänge 15 und einer Viskosität von 110 mm²/s bei 25^{°}C(SA 1) oder mit einem α,ω-diacrylierten Polydimethylsiloxan der mittleren Kettenlänge 60 und einer Viskosität von 310 mm²/s bei 25°C (SA 2) in den in Tabelle 1 beschriebenen Mengenverhältnissen hergestellt. Die α,ω-diacrylierten Polydimethylsiloxane SA 1 und SA 2 entsprechen der allgemeinen Formel

G-SiMe₂O(SiMe₂O)ₜSiMe₂-G (Me = Methylrest),

wobei G ein Rest der Formel 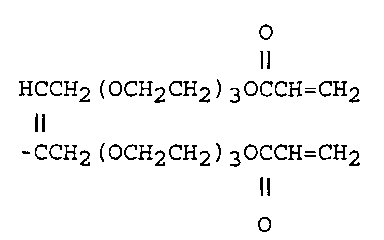 ist, und t durchschnittlich 13 (SA 1) bzw. 58 (SA 2) bedeutet.

Alle nachfolgenden Formulierungen (siehe Tabelle 1) sind jeweils mit 2 Gew.-% 2-Hydroxy-2-methyl-1-phenylpropan-1-on (Darocur 1173, Fa. Ciba Geigy) versetzt und stellen klare, gelbe bis braune Mischungen dar. Die fertigen Formulierungen werden mit einem Glasstab in einer Schichtdicke von ca. 3 µm auf eine Polypropylenfolie der Fa. UCB aufgebracht und in einer Stickstoffatmosphäre mit 30 ppm Restsauerstoff unter einer H-Lampe der 300er - Serie der Fa. Fusion 2 Sekunden bei 30°C gehärtet. Für die Ermittlung der Trennwerte werden verschiedene, 25 mm breite Klebebänder verwendet, und zwar ein mit Acrylatkleber beschichtetes Klebeband, das im Handel unter der Bezeichnung tesa 7475 erhältlich ist, sowie ein mit Kautschukkleber beschichtetes Klebeband, welches im Handel unter der Bezeichnung tesa 7476 erhältlich ist.

Zur Messung der Abhäsivität werden diese Klebebänder auf das gehärtete Silicon aufgewalzt und anschließend bei 70°C unter einem Gewicht von 60 g/cm² gelagert. Nach 24 h wird die Kraft gemessen, die benötigt wird, um das jeweilige Klebeband mit einer Geschwindigkeit von 30 cm/min unter einem Schälwinkel von 180° vom Silicon abzuziehen. Diese Kraft wird als Trennkraft bezeichnet. Die allgemeine Testprozedur entspricht im wesentlichen der Finat-Testmethode Nr. 10.
Die Ergebnisse sind in Tabelle 1 zusammengefaßt.

**Tabelle 1**

| **Trennwerteinstellung durch unterschiedliche CRA-Konzentrationen** | | | | | | |
|---|---|---|---|---|---|---|
| Mischung **CRA 1/SA 1** in Teilen^{*} | 100/0 | 90/10 | 80/20 | 70/30 | 60/40 | 50/50 |
| Trennwert tesa 7475 [cN/cm] | 349 | 331 | 277 | 241 | 182 | 128 |
| Trennwert tesa 7476 [cN/cm] | 248 | 232 | 203 | 186 | 149 | 111 |

| **CRA 2/SA 1** in Teilen | 100/0 | 90/10 | 80/20 | 70/30 | 60/40 | 50/50 |
|---|---|---|---|---|---|---|
| Trennwert tesa 7475 [cN/cm] | 476 | 457 | 437 | 394 | 364 | 281 |
| Trennwert tesa 7476 [cN/cm] | 457 | 451 | 440 | 410 | 387 | 215 |

| **CRA 2/SA 2** in Teilen^{*} | | 90/10 | 80/20 | 70/30 | 60/40 | 50/50 |
|---|---|---|---|---|---|---|
| Trennwert tesa 7475 [cN/cm] | | 81 | 68 | 42 | 32 | 24 |
| Trennwert tesa 7476 [cN/cm] | | 218 | 136 | 71 | 56 | 43 |

| **CRA 3/SA 2** in Teilen^{*} | | | 80/20 | 70/30 | 60/40 | |
|---|---|---|---|---|---|---|
| Trennwert tesa 7475 [cN/cm] | | | 109 | 84 | 57 | |
| Trennwert tesa 7476 [cN/cm] | | | 89 | 67 | 56 | |

| | | | | | | |
|---|---|---|---|---|---|---|
| ^{*}Teilen = Gewichtsteilen | | | | | | |

### Beispiele 5 bis 7:

Die fertigen Formulierungen werden durch Mischen der oben beschriebenen CRA 1-3 mit einem α,ω-diacrylierten Polydimethylsiloxan SA1 oder SA2 (siehe Beispiel 1-4) gemäß den in Tabelle 2 angegebenen Gewichtsteilen hergestellt. Alle nachfolgenden Formulierungen sind jeweils mit 2 Gew.-% 2-Hydroxy-2 -methyl-1-phenylpropan-1-on (Darocur 1173 Fa. Ciba Geigy) versetzt. Die in Tabelle 2 genannten Substrate werden mit den fertigen Formulierungen wie in Beispiel 1-4 beschrieben, beschichtet.

Zur Bestimmung des rub-off (Abrieb) werden die beschichteten Substrate mit Daumen und Zeigefinger gespannt. Unter kräftigem Druck wird sodann mit dem Finger der anderen Hand auf dem gestrafften Substrat mehrmals zügig hin und her gerieben. Haftet der Siliconfilm auf der Substratoberfläche schlecht, wird ein Teil des Siliconauftrages abgerieben. Der Abrieb wird entsprechend der Stärke mit den Noten 1 - 6 beurteilt, wobei eine vollkommen unverletzte Oberfläche mit der Note 1 bewertet wird.
Die Ergebnisse sind in Tabelle 2 zusammengefaßt.

**Tabelle 2**

| **rub-off Werte der unterschiedlichen Mischungen aus CRA/SA/2% Darocur 1173** | | | | | |
|---|---|---|---|---|---|
| | Substrate | | | | |
| Mischung in Gewichtsteilen | Bosso 925 (Fa. Bosso) | Polypropylen* CR 50 (Fa. UCB) | Siliconrohpapier T4377 (Fa. Finnpap) | Cham Tenero 841 (Fa. Cham Tenero AG) | HDPE Q24000* (Fa. 4P Folie) |
| CRA 1/SA1 90/10 | 1 | 1 | 2 | 1 | 1 |
| CRA 2/SA1 70/30 | 1 | 1 | 2 | 2 | 1 |
| CRA 3/SA2 60/40 | 1 | 1 | 2 | 1 | 1 |

| | | | | | |
|---|---|---|---|---|---|
| * Die o. g. Folien wurden vor der Beschichtung Corona vorbehandelt. | | | | | |

## Patentansprüche

1. Strahlungshärtende Zusammensetzungen enthaltend
(A) (Meth)acryloxygruppen aufweisende lineare Organopoly-siloxane der allgemeinen Formel
R¹ₓR₃₋ₓSiO(R₂SiO)ₘ(SiRR¹O)ₙSiR₃₋ₓR¹ₓ (I)
und/oder
R¹ₐR₃₋ₐSiO(R₂SiO)_{c}[R₂Si-Y-SiR₂O(R₂SiO)_{c}]_{d}SiR_{3-b}R¹_{b} (II)
wobei R gleich oder verschieden sein kann, einen einwertigen, gegebenfalls substituierten Kohlenwasserstoffrest mit 1 bis 18 Kohlenstoffatomen je Rest, der frei von endständigen aliphatischen Kohlenstoff-Kohlenstoff-Mehrfachbindungen ist, bedeutet
und Reste der Formel -O-R*'* bedeutet, wobei R*'* einen einwertigen Kohlenwasserstoffrest mit 1 bis 12 Kohlenstoffatomen je Rest oder ein Wasserstoffatom bedeutet,
R¹ ein Rest der Formel 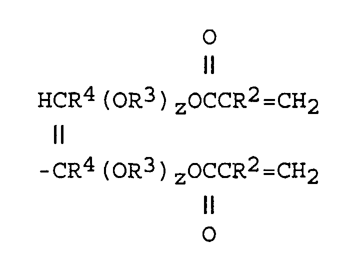 ist, wobei z eine ganze Zahl im Wert von 1 bis 10,
R² ein Wasserstoffatom oder einen Methylrest,
R³ einen linearen oder verzweigten Alkylenrest mit 1 bis 6 Kohlenstoffatom(en) je Rest und
R⁴ einen linearen oder verzweigten Alkylenrest mit 1 bis 6 Kohlenstoffatom(en) je Rest bedeutet,
m 0 oder eine ganze Zahl im Wert von 1 bis 200 ist,
n 0 oder eine ganze Zahl im Wert von 1 bis 200 ist,
x 0 oder 1 ist,
mit der Maßgabe, daß in Formel (I) mindestens ein Rest R¹ je Molekül enthalten ist,
Y einen zweiwertigen, organischen Rest, der frei von endständigen aliphatischen Kohlenstoff-Kohlenstoff-Mehrfachbindungen ist, bedeutet,
a 0 oder 1 ist,
b 0 oder 1 ist,
mit der Maßgabe, daß in Formel (II) die Summe a + b je Molekül 1 oder 2, durchschnittlich 1,3 bis 1,9 ist,
c eine ganze Zahl im Wert von 1 bis 1 000 ist und
d 0 oder eine ganze Zahl im Wert von 1 bis 10 ist,
(B) (Meth)acryloxygruppen aufweisende Copolymere ausgewählt aus einer Gruppe bestehend aus
(B1) einem MQ-Copolymer enthaltend Struktureinheiten M^{o}Q und/oder M¹Q,
(B2) einem MT-Copolymer enthaltend Struktureinheiten M¹T und/oder M^{o}T¹ und/oder M¹T¹ und/oder M^{o}T^{o}
(B3) einem MTQ-Copolymer enthaltend Struktureinheiten M¹T^{o}Q und/oder M^{o}T¹Q und/oder M¹T¹Q und/oder M^{o}T^{o}Q und
(B4) einem MDQ-Copolymer enthaltend Struktureinheiten M¹D^{o}Q und/oder M^{o}D¹Q und/oder M¹D¹Q und/oder M^{o}D^{o}Q wobei
M^{o} eine R₃SiO_{1/2} - Einheit,
M¹ eine R¹R₂SiO_{1/2} - Einheit,
D^{o} eine R₂SiO - Einheit,
D¹ eine R¹RSiO - Einheit,
T^{o} eine RSiO_{3/2} - Einheit,
T¹ eine R¹SiO_{3/2} - Einheit und
Q eine SiO₂ - Einheit ist,
wobei R und R¹ die oben dafür angegebene Bedeutung haben, und
(C) Photoinitiatoren
und gegebenenfalls
(D) organische Mono-, Di- oder Oligo(meth)acrylate oder deren Gemische.

2. Strahlungshärtende Zusammensetzungen nach Anspruch 1, dadurch gekennzeichnet, daß R¹ ein Rest der Formel 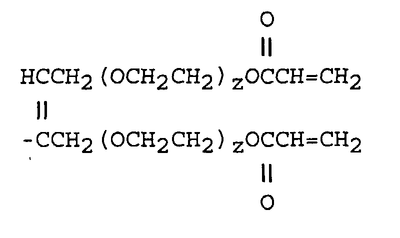 ist, wobei z eine ganze Zahl im Wert von 2 bis 8 ist.

3. Strahlungshärtende Zusammensetzungen nach Anspruch 1 oder 2, dadurch gekennzeichnet, daß die Copolymere (B) in der Komponente (A) löslich sind.

4. Strahlungshärtende Zusammensetzungen nach Anspruch 1, 2 oder 3, dadurch gekennzeichnet, daß das Copolymer (B) ein M^{o}T¹Q-Harz oder ein M^{o}M¹Q-Harz ist, wobei M^{o}, M¹, T¹ und Q die in Anspruch 1 dafür angegebene Bedeutung haben.

5. Formkörper, hergestellt durch Vernetzung der Zusammensetzungen gemäß einem der Ansprüche 1 bis 4.

6. Formkörper nach Anspruch 5, dadurch gekennzeichet, daß es sich um Beschichtungen handelt.

7. Verfahren zur Herstellung von Beschichtungen, dadurch gekennzeichnet, daß die Zusammensetzung gemäß einem der Ansprüche 1 bis 4 auf das Substrat aufgetragen und durch Bestrahlung mit energiereicher Strahlung vernetzen gelassen wird.

8. Verfahren nach Anspruch 7, dadurch gekennzeichnet, daß es sich bei den Beschichtungen um klebrige Stoffe abweisende Überzüge handelt.

9. (Meth)acryloxygruppen aufweisende Copolymere (B) ausgewählt aus einer Gruppe bestehend aus
(B1) einem MQ-Copolymer enthaltend Struktureinheiten M¹Q,
(B2) einem MT-Copolymer enthaltend Struktureinheiten M¹T und/oder M^{o}T¹ und/oder M¹T¹,
(B3) einem MTQ-Copolymer enthaltend Struktureinheiten M¹T^{o}Q und/oder M^{o}T¹Q und/oder M¹T¹Q und
(B4) einem MDQ-Copolymer enthaltend Struktureinheiten M¹D^{o}Q und/oder M^{o}D¹Q und/oder M¹D¹Q wobei
M^{o} eine R₃SiO_{1/2} - Einheit,
M¹ eine R¹R₂SiO_{1/2} - Einheit,
D^{o} eine R₂SiO - Einheit,
D¹ eine R¹RSiO - Einheit,
T^{o} eine RSiO_{3/2} - Einheit,
T¹ eine R¹SiO_{3/2} - Einheit und
Q eine SiO₂ - Einheit ist,
wobei R und R¹ die im Anspruch 1 dafür angegebene Bedeutung haben.
